# EUROPEAN PATENT APPLICATION

(11) **EP 0 621 124 A1**
(43) Date of publication of application: **26.10.1994**
(21) Application number: 94105534.5
(22) Date of filing: 11.04.1994
(51) Int. Cl.: B29D 30/52, B65H 75/02

(54) **Method and apparatus for building a tire and storing strip material**

(30) Priority: 21.04.1993 US 49374
(71) Applicant: THE GOODYEAR TIRE & RUBBER COMPANY, Akron, Ohio 44316-0001 (US)
(72) Inventor: Roman, John Patrick, Cuyahoga Falls, Ohio 44223 (US); Cappelli, Matthew Ray, Canal Fulton, Ohio 44614 (US)
(74) Representative: Leitz, Paul

(57) **Abstract**

A method and apparatus for building a tire including storing strip material (44) in a spool storage arrangement (12) without crushing underlying layers of the strip material by threading a relatively stiff liner (40) into a spiral groove (36) which is on the opposing axially inner surfaces of the spool (12). The spool rotates, drawing the liner and strip material into it and storing it in a series of coaxial spiral hoops. Radially outward layers of liner and strip material do not contact radially inward layers of liner and strip material, thus protecting the profile of the strip material from crushing.

## Description

This invention relates to a method and apparatus for building a tire including storing strip materials such as tire tread or sidewalls after extrusion and before application to an unvulcanized tire without deforming the strip material while it is in storage.

### Background of Invention

Heretofore, strip material for building a tire has been carried on a liner and stored on a spool with the individual layers of liner separating the individual layers of strip material. At the top of the spool the weight of the outer layers of strip material was carried by the inner layers of strip material and has deformed the inner layers. This has been especially undesirable when the strip material had a predetermined cross-sectional profile shape, as in the case of a tread or sidewall of a tire.

### Summary of the Invention

The present invention provides for building a tire with a spool having a pocket and having a hub and flanges with a spiral groove on the inner faces of the flanges. The liner is fed into a spiral groove in the flanges of the spool and forms a pocket which supports and protects the strip material. The edges of the liner maintain the convolutions in spaced relation so that the strip material is not compressed or deformed. The liner is made of a material which is stiff enough to support the strip material when it is suspended between the interfaces of the flanges and has sufficient resiliency to bend and spring into the spiral groove during winding of the liner on the spool. This resilience of the liner permits removal of the liner from the spiral groove as it is unwound from the spool. By supporting the liner in a coiled configuration in the flanges of the spool, the liner is held in the shape of a hoop which provides increased strength to support the strip material. Guides may be provided to engage the edges of the liner before it enters the spool for deflecting the edges of the liner in a direction normal to the line of travel of the liner and decreasing the width of the liner so that it may pass between the flanges of the spool.

According to an aspect of the invention there is provided an improved process for building a pneumatic tire having a casing and a tread comprising the steps of:
(a) extruding a strip of tread;
(b) winding the strip of tread in a spiral about an axis, the length of the strip being greater than that required for application to a plurality of casings sized for the extruded tread profile;
(c) unwinding the strip of tread and cutting the strip to a length;
(d) applying the cut length of tread to the tire casing;
the improved process being characterized by step (b) above comprising the step of:
preventing deformation of the tread while being spirally wound by preventing the weight of a portion of one winding of the tread from being transferred to another winding of the tread located beneath the one winding.

According to another aspect of the invention there is provided a method of storing strip material in a spool without compressing portions of said strip material underlying other portions of said strip material comprising the steps of:
(a) attaching a first end of a liner to a spool, said spool having spaced-apart flanges providing a spiral groove in the axially inward, opposing surfaces of said flanges for receiving edges of said liner;
(b) rotating said spool to pull said liner into said groove; and,
(c) applying said strip materials to said liner as said spool is rotated.

According to another aspect of the invention there is provided an apparatus for storing strips of unvulcanized rubber in a spool. The spool comprises a generally cylindrical core having axially outer ends and an axis. First and second flanges of the spool have axial centerlines which are coaxial with the axis of the core. Each of the flanges has an axially inner surface and an axially outer surface. Each of the axially inner surfaces being fixedly attached to one of the axially outer ends of the core and the axially inner surfaces of flanges having liner supporting means for supporting an associated liner.

One advantage of the present invention is the improved quality and uniformity of the strip material, and ultimately the tire itself, due to the prevention of deformation of the material by the weight of radially outward layers crushing radially inward layers of the strip material while it is being stored in the spool.

Other advantages are the relatively simple mechanisms of the invention which can be used in conjunction with existing equipment and methods to utilize the advantages of the herein disclosed innovative spool.

Still other benefits and advantages of the invention will become apparent to those skilled in the art to which it pertains upon a reading and understanding of the following disclosure.

### IN THE DRAWINGS

FIGURE 1 is a front elevational view in partial cross-section of one embodiment of the invention.

FIGURE 2 is a plan view of the embodiment shown in FIGURE 1 taken along line 2-2 of FIGURE 1.

FIGURE 3 is an enlarged view of the embodiment of the invention shown in FIGURE 1 with parts being broken away.

FIGURE 4 is a fragmentary side view of the invention taken along line 4-4 of FIGURE 3.

FIGURE 5 is a front elevational view of a second embodiment of the invention.

FIGURE 6 is a side elevational view of the embodiment taken along line 6-6 of FIGURE 5.

FIGURE 7 is a third embodiment of the invention.

FIGURE 8 is a side elevational view taken along line 8-8 of FIGURE 7.

FIGURE 9 is a plan view of one end of a liner prior to its application to the spool of the invention showing the liner surface in contact with the core.

FIGURE 10 is a cross-sectional side elevational view of the liner of FIGURE 9 taken along line 10-10.

FIGURE 11 is a schematic side view of part of a tire building process incorporating the invention.

FIGURE 12 is a table showing results of testing tire treads stored in conventional storage spool.

FIGURE 13 is an illustration showing tread profiles of treads stored in conventional storage devices and tread profiles of tread stored in the inventive storage devices described herein.

FIGURE 14 is a schematic illustration of another portion of the tire building process.

### Description Of The Preferred Embodiment

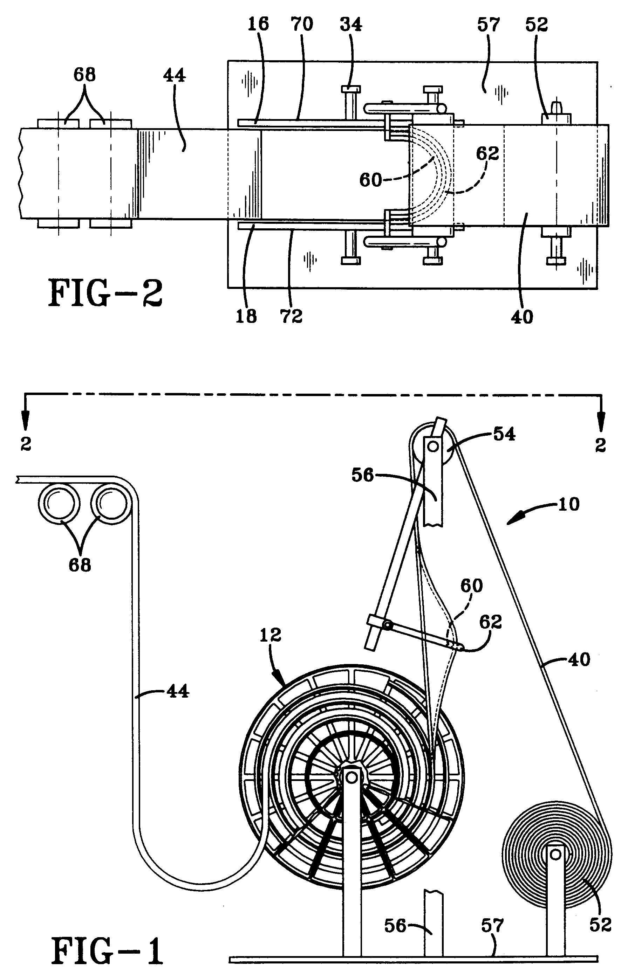

With reference to FIGURES 1-4, the innovative apparatus 10 for storing a strip, is shown. A spool 12 has a core 14 and first and second flanges 16,18. Each of the flanges 16,18 has an axially outer surface 22,24 and an axially inner surface 28,30. The spool 12 is received on an axle 34 which is coincident with an axis of the spool and the spool can rotate thereon.

The axially inner surfaces 28,30 of the first and second flanges 16,18 have a plurality of a spiral groove 36. The groove 36 is adapted to selectively receive edges 38 of a liner 40.

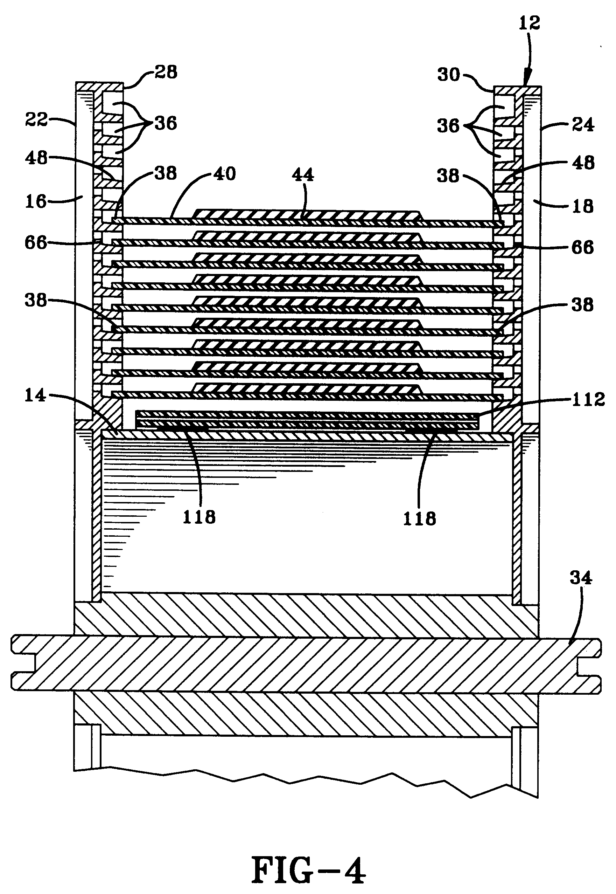

Upon a radially outward surface of the liner 40 is laid strip material 44. This strip material 44 can be unvulcanized elements of a tire, such as sidewalls, tread, apex or other strip materials which could be susceptible to crushing in conventional storage mechanisms. As can be seen in FIGURE 4, the liner 40 is made of a type of material and in a thickness stiff enough to prevent radially outer layers of liner 40 and strip material 44 from touching, and therefore deforming, radially inner layers of liner 40 and strip material 44. In the preferred embodiment, the liner 40 is made of no underlining rigid polyethylene terephthalate and has a thickness of 0.040 inches (0.102 cm.). The liner could be a polypropylene, or other suitable material.

With continuing reference to FIGURE 4, the radially inward surface 48 of the groove 36 is beveled dowardly. In the preferred embodiment of the groove 36, the radially inward surface 48 is bevelled so that it makes an angle of about 10 degrees with a line parallel to the axis of the spool 12. The purpose of the beveling is to facilitate insertion and removal of the liner edges 38.

With reference to FIGURE 1, the application of the strip material 44 and the liner 40 to the spool 12 is illustrated. The liner 40 is unwound from a conventional let-off 52 and passes over a pulley 54 which is supported by a rod 56. The liner 40 is then resiliently and elastically deformed urging the edges 38 of the liner 40 towards its axial centerline, thus decreasing its width.

One means of resiliently deforming liner 40 is a pair curved bars 60,62. With reference to FIGURE 4 it can be seen that the width of the liner 40 is slightly less than the width of the spool 12 between bases 66 of opposing groove 36 in the opposing axially inner surfaces 28,30 of the flanges 16,18. As such, the width of the liner 40 must be slightly reduced in order to fit the liner 40 into the groove 36. In the preferred embodiment, the edges 38 of the liner 40 are resiliently deflected toward one another, thus reducing the width of the liner 40, and then allowing it to snap axially outwardly toward the bases 66 of the groove 36.

By maintaining the liner 40 in a series of hoop-shaped convolutions, the hoop strength of the liner 40 is utilized to support the weight of the strip material 44. In the case of unvulcanized tire treads, the weight of the strip material 44 can be significant.

With reference again to FIGURE 1, the liner 40 is pulled through the space between the curved bars 60,62 and is resiliently deformed until the liner fits into an opening to the spiral-shaped groove 36 in the spool 12. After the spool 12 has rotated approximately 180 degrees, a conventional let-off 68 begins to simultaneously feed the strip material 44 into the spool 12 and onto a radially outward surface of the liner 40. In the event the strip material 44 is supplied to the spool 12 from the same side as the liner 40, the strip material may be laid on top of the liner and fed into the spool with the liner. The thickness of the liner 40 and the dimensions of the groove 36 are chosen so that a radially inward surface of the liner 40 does not touch the most radially outward surface of the strip material 44 which lies beneath it. This can be seen clearly in FIGURE 4 where a space remains between each of the respective layers of liner 40 and of strip material 44.

One of the primary benefits of this open space is the reduction or elimination of deformation in the radially outer or top surface of the strip material 44. In the case of a tread for a pneumatic tire, it is becoming more common to design a contoured or non-planar surface to the top of unvulcanized tread rubber. By designing various configurations in the uncured rubber cross-sectional profile, the tire designer can fill up the various tread lugs of the tread pattern without requiring the rubber to flow too great a distance to fill up the cavities of the mold. The farther tread rubber must travel in the mold to fill the cavities of the particular tread pattern of the mold, the more variation and non-uniformity there is introduced during the curing process. By carefully configuring the uncured, unvulcanized tread profile to resemble the shape to be actually used in the cured tire, many advantages are obtained.

However, in conventional spool storage mechanisms, the lower levels of tread support the significant weight of upper levels, thus crushing the profile and making it generally planar. The present invention offers the significant advantage of the liner 40 completely supporting the weight of the strip material 44 lying on it without crushing layers beneath it.

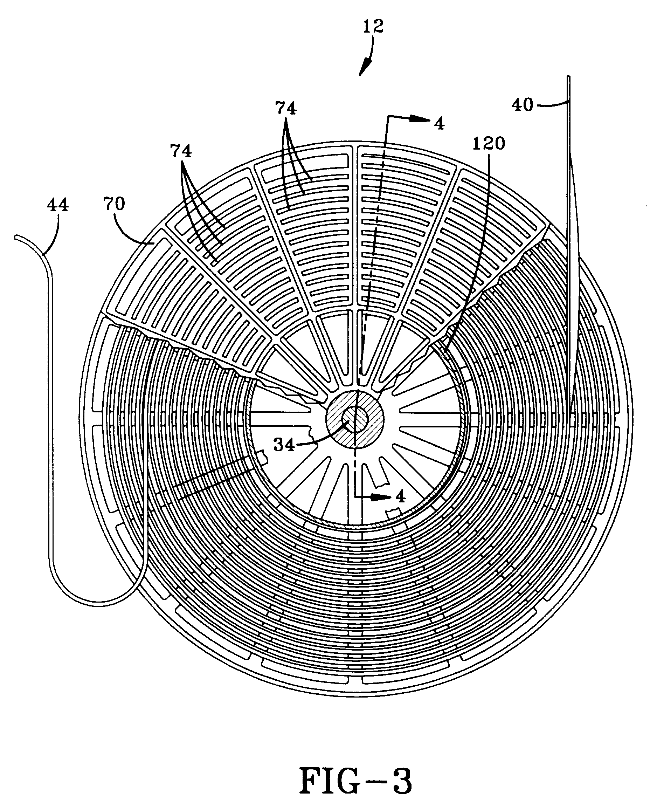

A second advantage of the open space between respective layers of liner 40 and strip material 44 involves the curing of the unvulcanized strip material 44 and the rate at which it cools while stored on the spool 12. As can be seen with reference to FIGURES 1 and 3, the axially outer surfaces 70,72 of the first and second flanges 16,18 have a series of openings 74. Because the strip material 44 is loaded onto the spool 12 directly from the extruder, it is still hot and in various stages of curing. By configuring the spool 12 as disclosed herein, air can pass back and forth through openings 74 and flow between the respective layers of strip material 44, thus cooling the strip material in a more uniform manner. In certain applications the openings 74 can be reduced in size or eliminated depending on the process requirements.

In the prior art spools, some radially inner portions of strip material could cure at a faster rate than radially outer portions of the same strip material. This was because the radially outer portions of strip material were still hot, having recently been extruded, and were wrapped around the radially inner portions of the strip material. Therefore, because the radially outer layers of strip material were closer to the surface, they would cool down faster and receive less cure than the radially inner portions of the same strip material. This difference in cure between different portions of tread material on the same spool could lead to non-uniformities in the tire.

With reference again to FIGURE 1, the method by which the liner 40 and strip material 44 is loaded onto the spool 12 will be described. After the liner 40 is initially wound on the rotating spool 12 the edges 38 of the liner 40 are pulled into the groove 36. As the spool 12 rotates an additional 180 degrees, a newly extruded strip of strip material 44 is laid on the radially outward surface of the liner 40. The process continues with the spool 12 rotating and loading liner 40 and strip material 44 into the spool in a spiral fashion until the spool 12 is full.

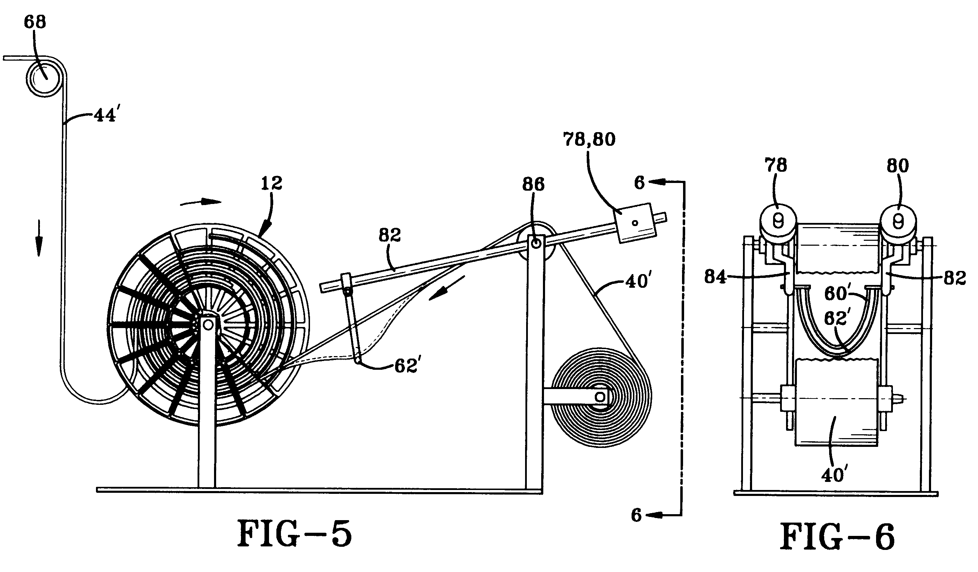

With reference to FIGURES 5 and 6, an alternate embodiment of the apparatus to resiliently deflect the edges 38' of the liner 40' toward the axial centerline of the liner 40' is disclosed. In the embodiment shown in FIGURES 1 and 2, the means to resiliently deflect the edges 38' of the liner 40' comprises curved bars 60,62. The embodiment shown in FIGURES 5 and 6 is similar to the embodiment shown in FIGURES 1 and 2, with the primary difference between the two embodiments being the feeding of the liner 40' from the side which may be necessary with a low ceiling. In the embodiment shown in FIGURES 5 and 6, the curved bars 60',62' are attached to rods 82,84 which have a fulcrum point 86. At the other end of rods 82,84 are counterweights 78,80. The counterweights 78,80 are helpful to maintain the position of the curved bars 60',62' along the path of the liner 40'.

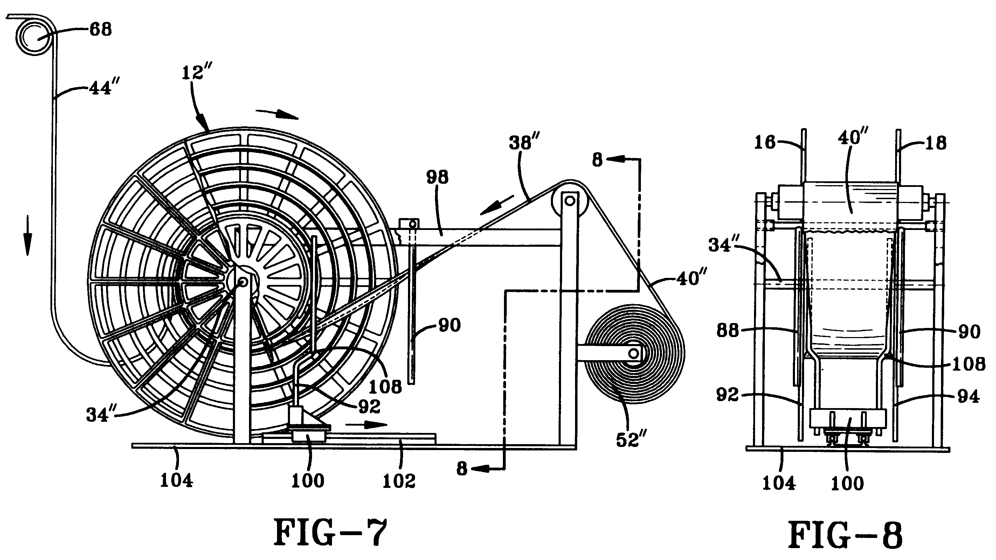

With reference to FIGURES 7 and 8, a third embodiment of the apparatus 10 is disclosed. The major elements of the apparatus 10 as shown in FIGURES 1 and 2 and FIGURES 5 and 6 are the same; the primary difference in this embodiment concerns the manner in which the edges 38 of the liner 40 are deflected toward the axial centerline of the liner. In the embodiment shown in FIGURES 7 and 8, this process is accomplished by means of deflecting bars 88,90,92,94. A first set of deflecting bars 88,90 initially deflect the edges 38'' of the liner 40''. The first set of deflecting bars 88,90 are mounted on a frame 98 which also supports the axle 34'' for the spool 12'' and let-off 52'' for the liner 40''. A second set of deflecting bars 92,94 is mounted on a sliding platform 100. The sliding platform 100 is translatable along a rail 102 which is mounted to a base 104 of frame 98. The second set of deflecting bars 92,94 have a bend 108 near their midpoint which is designed to accommodate the limitations of existing equipment. Should new spools, frames, and let-offs be configured to implement this new apparatus 10, this bend 108 will no longer be necessary.

The purpose of the sliding platform 100 is to adjust the deflecting qualities of the second deflecting bars 92,94 as the spool 12'' fills up with liner 40'' and strip material 44''. In the situation illustrated in FIGURE 7, the spool 12'' is nearly empty and the second set of deflecting bars 92,94 is fairly close to the axle 34 of the spool 12''. As the spool 12'' rotates and becomes filled with liner 40'' and strip material 44'', the second set of deflecting bars 92,94 slide radially outwardly away from the axis of the spool 12''.

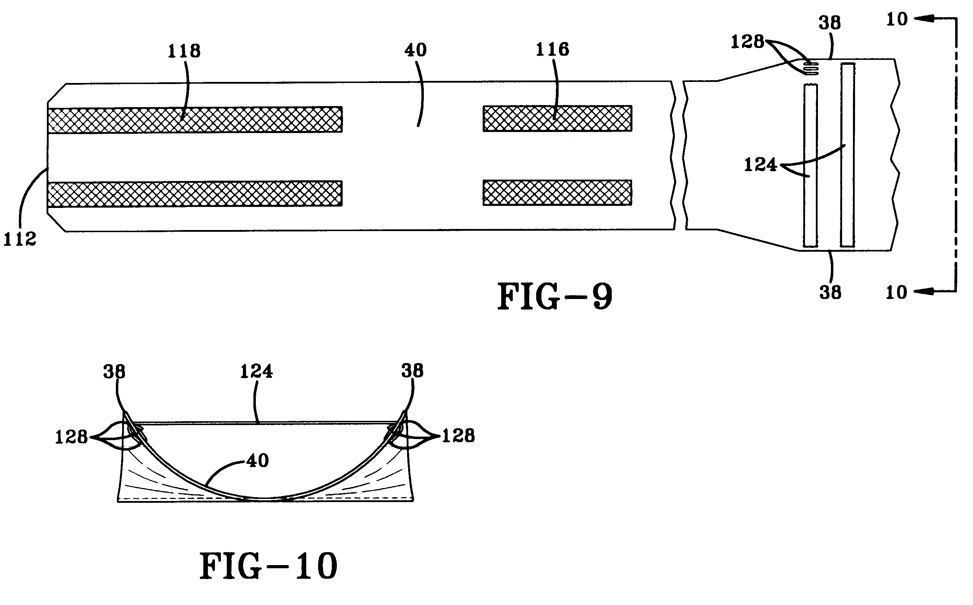

With reference to FIGURE 9, a first end 112 of the liner 40 is disclosed. Near the first end 112 of the liner 40 is a plurality of hook or loop strips 118. The corresponding portions of the hook or loop strips 118 can be selectively attached to hook or loop strips on the core 14 (not shown), and thereby the first end 112 of the liner 40 is attached to the core 14. One brand of hook and loop strips is sold under the federally registered trademark VELCRO®.

A plurality of hook or loop strips (not shown) may also be provided on the reverse side of the first end 112 under the hook and loop strips 118 for attachment to the hook or loop strips 116 when the liner 112 is wound on the let off 52.

With reference to FIGURE 3, when a empty spool 12 is being prepared for storing strip material 44 and liner 40, about one revolution of the end 112 of the liner 40 is wrapped around the core 14 of the spool and secured thereto by the hook or loop strips 118. The edges 38 of liner 40 are initially threaded into the first opening of groove 36 by means of a bar 120 on the surface of the core 14. When the liner 40 passes over the bar 120 it is moved radially outwardly from the surface of the core 14 and can be threaded into the opening of the spiral groove 36. Once the liner 40 has been correctly threaded into the groove 36, it follows the spiral pattern of the groove 36 and thus continues to be threaded into the entire spool 12.

Since initial threading of the liner 40 involves the first end 112 of the liner 40 being already past the means to deflect the edges 38 of the liner 40 toward its axial centerline, another means may be initially used. As shown in FIGURE 10 in one preferred embodiment, a elastic band 124 is woven through holes 128 in portions of liner 40 near its first end 112. The elastic band 124 helps deflect the liner 40 into the required width and configuration to slide into the groove 36.

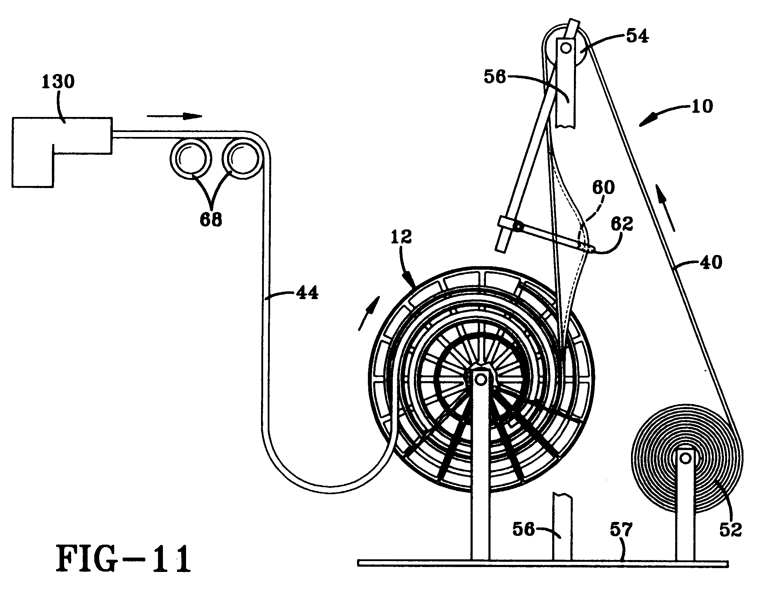

With reference to FIGURE 11, a typical tire building environment is shown in order to demonstrate how the innovative method and apparatus described herein coordinate with the conventional aspects of the modern tire building process.

An extruder 130 extrudes a strip of unvulcanized tread or strip material 44. The strip material 44 is wound onto the spool 12. Also wound simultaneously onto the spool 12 is liner 40 from let off 52.

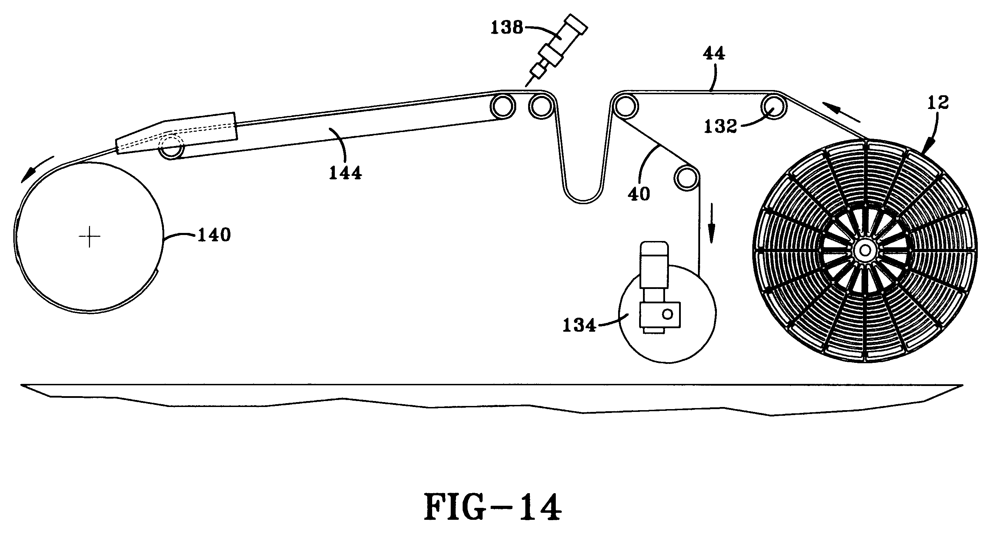

After the spool 12 has been loaded with strip material 44, it is moved to a tire building site such as is schematically illustrated in FIGURE 14. The spool 12 is rotated and the strip material 44 is pulled out of the spool via a series of rollers 132 as is conventionally done. The liner 40 is stripped off of the strip material 44 and gathered up on a windup 134 for reuse. The strip material is cut to length by conventional tread knife 138 and conveyed to the tire building drum 140 by a conveyer 144. As is evident from FIGURE 14, all of the tire building apparatus used in the process and illustrated in FIGURE 14 is conventional, except for the spool 12. As such, the invention allows improvements in tire quality with a minimum of disruption to existing equipment and minimum outlay of new capital.

### Experiments

Experiments were conducted to compare the characteristics of strip material 44 stored in the innovative apparatus 10 disclosed herein to strip material 44 stored in conventional prior art devices. The improvements obtained with the innovative apparatus 10 is illustrated in the tables and data which follow.

The performance tests compared the amount of non-uniformity in tires due to distortion of the unvulcanized tire tread contours occurring after extrusion and before the treads are built into tires. Distortion of extruded unvulcanized tire treads can occur during the wind-up, storage, transport and let-off processes at the tire machine.

Storage of unvulcanized tire treads in spools was found to result in tire tread non-uniformity.

In conventional storage devices, strip material 44 is wound about a spool with layers of underlying strip materials bearing the weight of the radially outer layers of strip material. In the test, the unvulcanized tread was allowed to stand in storage position on a conventional spool for one day.

It was found that the amount of distortion of the strip material varied depending on its radial position and circumferential position within the spool. A typical industry measurement of uniformity is the first harmonic of radial force generated by the tire as it rotates through one revolution. The distortion of the strip material (in this case tire tread) affected the radial first harmonic of the tire by creating variations in tread gauge around the tire circumference. In outer layers of tread stored in the spool, a length of tread sufficient to build one tire could be removed from the spool by rotating the spool approximately one-half rotation. In this tire, the variation and radial first harmonic is minimally affected. However, for portions of tire tread stored at a position closer to the core of the spool, the weight of the outer layers of tire tread distorted the radially inward treads more, and the variation around the spool circumference was also greater. Because the spool had to rotate greater radial amounts in order to deliver tire tread material stored near the core of the spool, greater variation is built into a single tire.

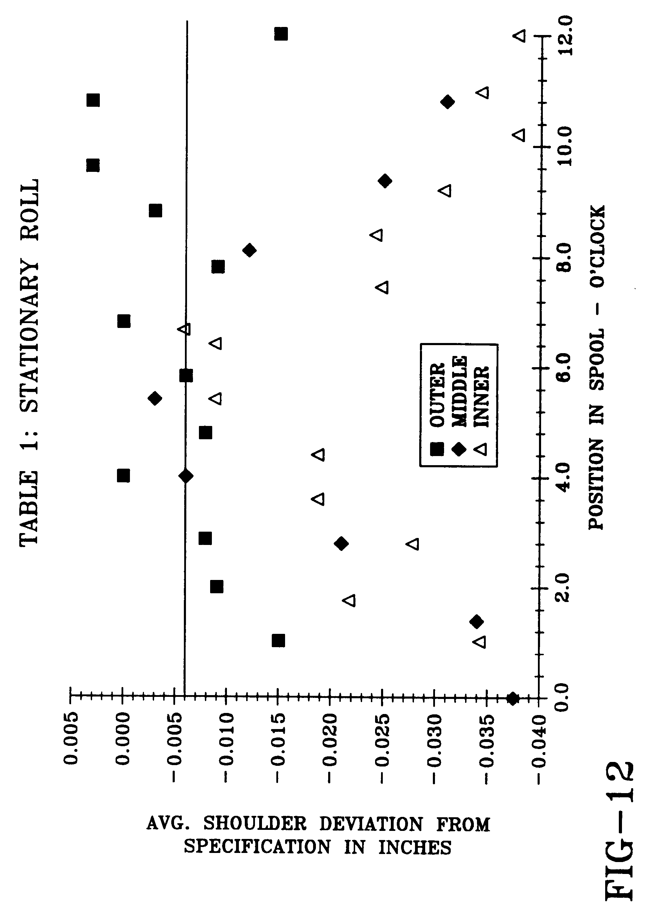

Under the conventional storage system, significant sag and tread distortion was discovered. The extent of sag could be seen from the difference in tread radius at the twelve o'clock and six o'clock positions of the spool 12. With reference to FIGURE 12, Table 1 shows the average shoulder height deviation from the specification for tread lengths taken from various positions within the spool. In Table 1, the horizontal axis measures the radial position of the tread segment within the spool, as likened to a clock. For example, the twelve o'clock position is the position at the top of the spool while the six o'clock position is the position at the bottom of the spool, nearest the floor. The vertical axis of Table 1 measures the average shoulder deviation from the specification in inches.

The data in Table 1 is arranged to differentiate between tread segments taken from radially outer layers of the spool 12 as well as segments taken from the middle or inner layers of the spool 12. The radially outer layers are designated with a square, the radially middle layers are designated with a diamond, while the radially innermost layers are designated with an open triangle.

The data indicated that the tread profiles of treads stored in the radially outer layers does not vary consistently about the circumference. However, tread profiles stored in the middle and inner layers do have strong consistent variations about the circumference, showing large distortions in treads stored at twelve o'clock and smaller distortions in treads stored at six o'clock. These distortions are due to the weight of the radially outer layers of tread crushing the treads stored in radially inner and middle areas of the spool 12. The treads in the outer layer were less distorted since the weight of the tread layers above them was not as great.

With reference to Table 1, when the amount of distortion varied within the spool 12, both within the radial position of the tread segment within the spool 12 and the circumferential (o'clock) position distortion of the tread within the spools 12 affected the radial first harmonic of the tire by creating variations in tread thickness about the tire's circumference. In outer layers of the spool, a tire can be built of approximately one-half of a spool's rotation and, with the variation and distortion being relatively small and the tire's radial first harmonic was minimally affected. However, with tread segments located radially deeper within the spool, the increased weight of radially outer tread segments created greater distortion in the treads and larger variation about the spool's circumference. Further, due to the smaller diameter of the spool at radially inward points, the tread varied more and at more points along the length of the tread, leading to greater non-uniformities in tire performance.

The above experiment clearly indicates the non-uniformities were built into the tire due to conventional storage technique. The following experiment will show the clear improvements obtained through the use of the innovative apparatus 10 and process disclosed herein.

A prototype spool 12 according to the invention was fabricated using a 1000 millimeter diameter plastic spool with a spiral groove 38 fastened to the radially inward faces of the flanges 16,18. A polyethylene terephthalate liner 40 was used. The prototype was installed at the end of a triplex extruder line which was making a light truck tire tread with shoulders approximately one half inches high. It was compared with a conventional spool utilizing conventional winding techniques. Identical treads and tread profiles went on each spool. The unvulcanized strip of tread rubber on the spool embodying the invention was wound on the spool at a temperature between 110 degrees Fahrenheit (43 degrees Centigrade) and 97 degrees Fahrenheit (36 degrees Centigrade). The tread was wound on the unmodified spool at a temperature between 97 degrees Fahrenheit (36 degrees Centigrade) and 85 degrees Fahrenheit (29 degrees Centigrade). Since the tread in the innovative spools was hotter and therefore softer it could be considered to be the worse of the two cases. The two spools were stored for twenty-four hours before the treads were removed. The twelve o'clock position was marked on each of the spools. A control section of tread was cut in order to compare the "as extruded" profiles on the tread compared with the profiles of the tread as wound in the two spools.

Both spools of tread were unwound and laid flat on the floor. At the twelve o'clock, three o'clock, six o'clock, and nine o'clock positions of the spools, the treads were marked as they were unwound. Representative sections of the tread were cut out of the tread to measure the tread profiles. These sections were cut out at a radially inward point, a radial midpoint, and at a radially outer point of each spool.

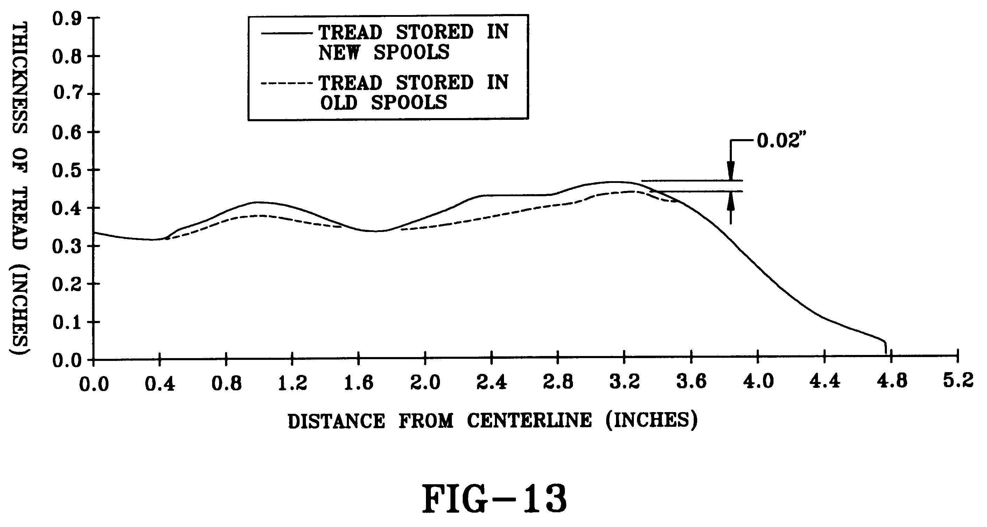

In the conventional spool, the tread profiles showed a noticeable deformation and crushing at the shoulders of treads stored on the radially innermost layers at the twelve o'clock location. With reference to the graph shown in FIGURE 13, an illustration of this crushing can be seen. The tread profile of tread stored in the conventional spools is shown in solid lines. The tread profile of tread stored in the spool embodying the invention is shown in dotted lines.

There was no noticeable deformation on the radially outermost layers of tread, since the weight of radially outer layers was minor.

In the spool embodying this invention there was no noticeable deformation at any clock position or any point throughout the radial extent of the spool, even at the core 14 itself.

In addition, in the conventional spool, there was the usual adhesion between the liner 40 and the tread. In the innovative spool 12 according to the invention, there was significantly less adhesion; the tread easily separated from the liner 40 while unwinding.

Subsequent trials have been run to confirm the improvements in tire performance due to the innovative spool 12 and method disclosed herein. Three trials were run, and the results are tabulated in Table 3.

**TABLE 3**

| **FIRST TRIAL** | **No. Tires** | **Radial 1st** | **Improvement** |
|---|---|---|---|
| NEW SPOOL | 149 | 5.87 lbs. | 0.48 lb (6.8%) |
| OLD SPOOL | 167 | 6.35 lbs. | |

| **SECOND TRIAL** | | | |
|---|---|---|---|
| NEW SPOOL | 155 | 5.74 lbs. | 1.52 lb (20.9%) |
| OLD SPOOL | 161 | 7.26 lbs. | |

| **THIRD TRIAL** | | | |
|---|---|---|---|
| NEW SPOOL | 153 | 7.06 lbs. | 0.42 lb (5.6%) |
| OLD SPOOL | 131 | 7.48 lbs. | |

In the first trial, a total of 316 tires were tested. 149 tires were built with tread stored in the spool 12 disclosed herein while 167 were stored in conventional spools. The average radial first harmonic in the tires made with treads stored in the spool 12 was 5.87 lbs. while the tires made from treads stored in conventional spool had an average radial first harmonic of 6.35 lbs., an improvement of 0.48 lbs.

In a second trial, another 316 tires were tested, with the tires built with tread stored in the spool 12 showing a 1.52 lbs. improvement in the radial first harmonic. In addition, the percentage of tires requiring grinding to lower the radial first harmonic for the control tires was 10.5% while only 3.2% of tires built using the spool 12 and method disclosed herein required grinding.

In a third trial, 284 tires were built. Tires built with tread stored in apparatus embodying the spool 12 disclosed herein showed a 0.42 lbs. improvement in radial first harmonic.

In each of the three trials described above, all tires built on the apparatus embodying the spool 12 showed less distortion of the type due to the treads sticking to the liner. In addition, no adjustments in tread length were required by the tire builder at the tire building machine, resulting in more usable tread in each spool and no measurable tread contour damage throughout the entire spool.

While certain representative embodiments and details have been shown for the purpose of illustrating the invention, it will be apparent to those skilled in the art that various changes and modifications may be made therein without departing from the spirit or scope of the invention.

## Claims

1. An improved process for building a pneumatic tire having a casing and a tread, the process comprising the steps of:
(a) extruding a strip of tread;
(b) winding the strip of tread in a spiral about an axis, the length of the strip being greater than that required for application to a plurality of casings sized for the extruded tread profile;
(c) unwinding the strip of tread and cutting the strip to a length;
(d) applying the cut length of tread to the tire casing;
the improved process being characterized by step (b) above comprising the step of:
preventing deformation of the tread while being spirally wound by preventing the weight of a portion of one winding of the tread from being transferred to another winding of the tread located beneath the one winding.

2. The improved process for building a pneumatic tire of claim 1 further characterized by step (b) including the steps of:
(a) winding the strip of tread with the axis of the spiral being substantially horizontal; and,
(b) maintaining said axis of the spiral substantially horizontal, preventing the weight of the wound tread layers in the spiral from being transferred to vertically underlying layers of the tread.

3. The improved process for building a pneumatic tire of claim 2 further characterized by step (b) including the steps of:
(a) spirally winding a liner material in wound liner material layers having rigidity sufficient to support at least one wound tread layer between the layers of the spirally wound strip of tread; and
tread; and
(b) providing a spacing between said wound liner material layers that is greater than the maximum radial cross sectional dimension of the tread strip.

4. A method of storing strip material in a spool without compressing portions of said strip material underlying other portions of said strip material, said method comprising the steps of:
(a) attaching a first end of a liner to a spool, the method being characterized by said spool having spaced-apart flanges providing a spiral groove in the axially inward, opposing surfaces of said flanges for receiving edges of said liner;
(b) rotating said spool to pull said liner into said groove; and,
(c) applying said strip materials to said liner as said spool is rotated.

5. An apparatus for storing strips of unvulcanized rubber on a liner in a spool, said spool comprising a generally cylindrical core having axially outer ends and an axis; first and second flanges having axial centerlines which are coaxial with said axis of said core, each of said flanges having an axially inner surface and an axially outer surface, each said axially inner surface being fixedly attached to one of said axially outer ends of said core, and characterized by said axially inner surfaces of said flanges having liner supporting means for supporting said liner.

6. The apparatus of claim 5 further characterized by said liner supporting means comprising a groove in each of said axially inner surfaces of said flanges.

7. The apparatus of claim 6 further characterized by said liner supporting means comprising a spiral groove extending radially outwardly from a radially inward starting point on each of said flanges, said starting point being near an interface of said core and one of said flanges.

8. The apparatus of claim 6 further characterized by at least one of said flanges having openings to communicate air to cool said strips of unvulcanized rubber.

9. The apparatus of claim 6 further characterized by said groove having a radially outer top surface and a radially inner bottom surface with said top surface being bevelled.

10. The apparatus of claim 6 further characterized by said liner being generally rectangular and having a length, width and thickness, said liner also having first and second axially outer edges, said first and second edges being selectively received into said groove.
